# EUROPÄISCHE PATENTSCHRIFT

(11) **EP 2 940 451 B1**
(45) Veröffentlichungstag und Bekanntmachung des Hinweises auf die Patenterteilung: **22.05.2019**
(21) Anmeldenummer: 14166735.2
(22) Anmeldetag: 30.04.2014
(51) Int. Cl.: G01N 3/42

(54) **MESSGERÄT ZUR BESTIMMUNG VON HÄRTEWERTEN ELASTISCHER WERKSTOFFE UND VERFAHREN ZUR BESTIMMUNG VON HÄRTEWERTEN ELASTISCHER WERKSTOFFE MIT EINEM MESSGERÄT**
MEASURING DEVICE FOR DETERMINING THE HARDNESS OF ELASTIC MATERIALS AND METHOD FOR THE DETERMINATION OF THE HARDNESS OF ELASTIC MATERIALS WITH A MEASURING DEVICE
APPAREIL DE MESURE DESTINÉ À DÉTERMINER DES VALEURS DE TREMPE DE MATIÈRES PREMIÈRES ÉLASTIQUES ET PROCÉDÉ DESTINÉ À DÉTERMINER DES VALEURS DE TREMPE DE MATIÈRES PREMIÈRES ÉLASTIQUES À L'AIDE DE L'APPAREIL DE MESURE

(43) Veröffentlichungstag der Anmeldung: 04.11.2015
(73) Patentinhaber: Heinrich Bareiss Prüfgerätebau GmbH, 89610 Oberdischingen (DE)
(72) Erfinder: Strobel, Peter, 89640 Oberdischingen (DE)
(74) Vertreter: Baur & Weber Patentanwälte PartG mbB

(56) Entgegenhaltungen:
- US-A- 4 450 713
- US-A1- 2005 076 709
- US-A1- 2008 028 840
- US-A1- 2009 100 916
- US-A1- 2011 226 044
- US-A1- 2012 085 155

## Beschreibung

Die Erfindung betrifft ein Messgerät zur Bestimmung von Härtewerten elastischer Werkstoffe sowie ein Verfahren zur Bestimmung von Härtewerten elastischer Werkstoffe mit einem Messgerät.

Aus dem allgemeinen Stand der Technik sind Messgeräte zur Bestimmung von Härtewerten elastischer Werkstoffe bekannt, die beispielsweise mittels eines Eindringkörpers Härtewerte nach diversen Standards bzw. Messverfahren durchführen können. Derartige Messgeräte werden entweder als Laboreinrichtungen bereit gestellt, in denen die Bestimmung der Härtewerte in kontrollierten Umgebungsbedingungen erfolgen kann, oder als Handmessgeräte, die über einen größeren Einsatzbereich verfügen.

Aus der DE 9318389 U1 ist ein elektronisches Prüfgerät zur Bestimmung der Härte von Kautschuk, Elastomeren und Kunststoffen nach DIN 53505, mit wenigstens einer Prüfstempeleinheit nach Shore A und/oder Shore D für den Shore-Härtebereich bekannt, wobei das Prüfgerät mit getrennter PrüfStempeleinheit nach Shore A und/oder Shore D für den Shore-Härtebereich ausgebildet und zur Gewinnung exakter und reproduzierbarer Messwerte in dem begrenzten Messbereich für den netzunabhängigen Betrieb mit wiederaufladbaren Batterien eingerichtet ist.

Bei der Bestimmung von Härtewerten ist es jedoch notwendig, neben dem definierten Messprogramm entsprechend des Mess-Standards auch die Temperatur der Umgebung bzw. des Prüflings im vorgeschriebenen Temperaturintervall zu halten.

Nachteilig erweist es sich hier, dass sich Temperatur bei einem während eines Transports abgekühlten Prüflings nur sehr langsam an die Umgebungstemperatur angleicht. Folglich muss eine lange Zeitspanne gewartet werden, bevor die Messung vorgenommen werden kann.

Aus der US 4,450,713 A ist ein Verfahren zur Härtebestimmung von gummielastischen Werkstoffen bekannt, bei dem ein als Eindringkörper geformter Fühler eine Bestimmung von Härtewerten durchführen kann. Der Eindringkörper ist dabei von einer Planfläche umgeben, in die ein Temperatursensor als in unmittelbar in Kontakt zur Oberfläche des Prüflings stehend angeordnet ist. Demnach ist es möglich, die Daten aus der Bestimmung der Härtewerte zusammen mit den Temperaturmesswerten anzuzeigen. US 2012/085155 offenbart eine Sensoreinheit, die berührungslos und als Emitter und Detektor für Infrarotstrahlung ausgeführt ist.

Es ist daher Aufgabe der Erfindung, ein Messgerät zur Bestimmung von Härtewerten elastischer Werkstoffe zu schaffen bzw. ein Verfahren zur Bestimmung von Härtewerten elastischer Werkstoffe mit einem Messgerät anzugeben, bei denen die oben genannten Nachteile vermieden werden können.

Diese Aufgabe wird durch den unabhängigen Patentanspruch 1 gelöst. Weitere vorteilhafte Ausgestaltungen der Erfindung sind jeweils Gegenstand der Unteransprüche.

Gemäß der Erfindung wird demnach ein Messgerät zur Bestimmung von Härtewerten elastischer Werkstoffe nach Anspruch 1 angegeben.

Demgemäß wird bei dem erfindungsgemäßen Messgerät neben der an sich bereits aus dem Stand der Technik bekannten Messeinrichtung zur Bestimmung der Eindringtiefe ein dem Prüfkörper eine weitere Messeinrichtung in Form der ersten Sensoreinheit bereitgestellt, die durch ein auf der Unterseite des Messgeräts angeordnete Messöffnung eine Temperaturmessung der Oberfläche des Prüfkörpers durchführen kann. Die Temperaturmessung des Prüfkörpers erfolgt somit nahe derjenigen Stelle, die auch zur Bestimmung der Eindringtiefe herangezogen wird. Dies erhöht die Aussagekraft der Temperaturmessung, da diese beispielsweise nicht durch einen starken Temperaturgradienten des Prüfkörpers verfälscht werden kann.

Gemäß einer weiteren Ausführungsform der Erfindung sind die Ausgangssignale der ersten Sensoreinheit zur Messung der Temperatur des Prüfkörpers und der Messeinrichtung zur Bestimmung der Härte des Prüfkörpers zu einer oberhalb des Unterteils in einem Kopfteil angeordneten Anzeigeeinheit übertragbar.

Demnach werden die Ausgangssignale der Messeinrichtung und der ersten Sensoreinheit innerhalb des Messgeräts weiter verarbeitet, um beispielsweise auf einer Anzeigeeinheit durch entsprechende Symbole angezeigt zu werden. Demnach kann sowohl die Temperatur des Prüfkörpers als auch die aus der Eindringtiefe abgeleitete Härte des Prüfkörpers bestimmt und/oder dargestellt werden. Es ist aber auch denkbar, dass die beiden Werte miteinander kombiniert werden, so dass bereits ein bezüglich der Temperatur des Prüfkörpers kompensierter Härtewert darstellbar ist.

Gemäß einer weiteren Ausführungsform der Erfindung sind die Ausgangssignale der ersten Sensoreinheit zur Messung der Temperatur des Prüfkörpers und der Messeinrichtung zur Bestimmung der Härte des Prüfkörpers zu einer Schnittstelle zum Anschluss eines Rechners übertragbar.

Demnach werden die Ausgangssignale an eine Schnittstelle übertragen, so dass sie einem externen Rechner zuführbar sind. Der externe Rechner kann nun aus den Ausgangssignalen einen entsprechenden temperaturkompensierten Härtewert errechnen oder die Ausgangssignale jeweils einzeln abspeichern. Gemäß der Erfindung ist es aber auch vorgesehen, dass die Schnittstelle zum Anschluss des Rechners zusätzlich oder anstelle zu der im Kopfteil angeordneten Anzeigeeinheit vorhanden ist.

Gemäß einer weiteren Ausführungsform der Erfindung ist in dem Kopfteil eine zweite Sensoreinheit angebracht, die eine Temperaturmessung der Umgebung des Messgeräts durchführen kann.

Die zweite Sensoreinheit stellt als zusätzliche Messgröße die Umgebungstemperatur des Messgeräts zur Verfügung. Diese kann zusammen mit den Werten der Eindringtiefe bzw. Härte des Prüfkörpers, der Temperatur des Prüfkörpers oder dem bezüglich der Temperatur des Prüfkörpers kompensierte Härtewert des Prüfkörpers weiter verarbeitet und/oder abgespeichert werden.

Gemäß einer weiteren Ausführungsform der Erfindung ist das Messgerät mit einer weiteren Sensoreinheit ausgestattet, die eine Luftfeuchtigkeitsmessung der Umgebung des Messgeräts durchführen kann.

Bekanntlich werden Härtemessungen verfälscht, sofern der Prüfkörper nicht bei den spezifizierten Umgebungsbedingungen einer Messung unterzogen wird, wozu auch die Kontrolle der Luftfeuchtigkeit in der Umgebung des Messgeräts gehört. Die erfindungsgemäße Ausgestaltung ermöglicht es daher, die Luftfeuchtigkeit in der Umgebung des Messgeräts zusätzlich zu den bereits erläuterten Messgrößen zu bestimmen, um diese zu dokumentieren und/oder in weitere Berechnungen einfließen zu lassen.

Die erste Sensoreinheit ist berührungslos ausgeführt. Dazu ist die erste Sensoreinheit als Emitter und Detektor für Infrarotstrahlung ausgeführt, wobei die erste Messöffnung ein in der Abschlussfläche eingebrachtes Fenster aufweist, das für Infrarotstrahlung teilweise oder vollständig transparent ist.

Eine berührungslose Temperaturmessung beispielsweise mittels eines im Infrarotbereich arbeitenden Sensors ermöglicht eine einfache Realisierung der ersten Sensoreinheit, die insbesondere die oftmals mechanisch sehr komplexe und gegen Störungen anfällige Messeinrichtung zur Bestimmung der Eindringtiefe wenig oder gar nicht stört. Dies ist insbesondere dann wichtig, wenn das Messgerät geeichte Härtewerte ausgeben soll.

Gemäß einer weiteren Ausführungsform der Erfindung ist bei dem Messgerät eine Steuereinheit eingerichtet, die Steuersignale an die Messeinrichtung und die erste Sensoreinheit abgeben kann um Messungen zur Bestimmung der Ausgangssignale der Messeinrichtung und der ersten Sensoreinheit zu starten.

Demnach werden die Messeinrichtung zur Bestimmung der Eindringtiefe und die erste Sensoreinheit zur Bestimmung der Temperatur des Prüfkörpers von der Steuereinheit so kontrolliert, dass entsprechende Messwerte aufgezeichnet werden. Dabei kann die erste Sensoreinheit beispielsweise kontinuierlich Ausgangssignale abgeben, wobei nur dasjenige Ausgangssignal übertragen wird, das zum Zeitpunkt der Bestimmung der Eindringtiefe aufgenommen wurde. Dabei können beispielsweise entsprechende Mittelwertbildungen die Messgenauigkeit weiter erhöhen. Es kann aber auch vorgesehen sein, dass die erste Sensoreinheit nur dann Ausgangssignale abgibt, wenn auch die Messeinrichtung zur Bestimmung der Eindringtiefe aktiviert ist. Die Steuereinheit kann dabei im Kopfteil des Messgeräts integriert sein. Demnach wird ein kompakter Aufbau des Messgeräts erreicht, das autark zu betreiben ist. Es kann aber auch vorgesehen sein, die Steuereinheit als externe Einheit mit dem Messgerät insbesondere über die Schnittstelle zum Anschluss des Rechners zu verbinden.

Gemäß einer weiteren Ausführungsform der Erfindung startet die Steuereinheit die Messungen zur Bestimmung des Ausgangssignals der Messeinrichtung und des Ausgangssignals der ersten Sensoreinheit in Folge eines Aufsetzens des Messgeräts auf den Prüfkörper.

Demnach wird eine automatische Messaufzeichnung gestartet, sobald das Messgerät auf den Prüfkörper aufgesetzt wurde. Dies ermöglicht eine einfache Handhabung des Messgeräts.

Die erste Sensoreinheit, die zweite Sensoreinheit oder die dritte Sensoreinheit können mit einer Kompensation der Eigentemperatur versehen sein.

Dies ermöglicht die genauere Erfassung der jeweiligen Messgrößen.

Gemäß einer weiteren Ausführungsform der Erfindung sind das Ausgangssignal der Messeinrichtung und das Ausgangssignal der ersten Sensoreinheit von der Steuereinheit zu dem bezüglich der Temperatur des Prüfkörpers kompensierten Härtewert bearbeitbar und an die Anzeigeeinheit übertragbar.

Demnach wird ein vollständig automatisches Messgerät beschrieben, bei dem die Ausgangssignale entsprechend korreliert und über die Anzeigeeinheit dargestellt werden. Ein derartiges Messgerät ist insbesondere beim Einsatz von Härteprüfgeräten im Rahmen beispielsweise einer Wareneingangskontrolle vorteilhaft einsetzbar.

Das Messgerät kann in eine Halteanordnung eingeführt werden, um ein stationäres Messgerät zu schaffen. Es ist aber auch möglich, das Messgerät als Handmessgerät aufzubauen, so dass es beispielsweise für den Außeneinsatz oder den Einsatz bei einer Wareneingangskontrolle entsprechende Messungen durchführen kann. Insbesondere im letzteren Fall, bei dem oftmals keine definierten Umgebungsbedingungen vorliegen, ist die zusätzliche Bestimmung der Temperatur der Oberfläche des Prüfkörpers und/oder der Temperatur der Umgebung und/oder der Umgebungsluftfeuchtigkeit von Vorteil.

Außerdem wird ein Verfahren zur Bestimmung von Härtewerten elastischer Werkstoffe mit einem oben beschriebenen Messgerät angegeben, bei dem eine Temperaturmessung der Oberfläche des Prüfkörpers und eine Härtemessung des Prüfkörpers mittels des Messgeräts durchgeführt werden.

Nachfolgend werden einige Ausführungsbeispiele anhand der Zeichnungen näher erläutert. Es zeigen:
- Fig. 1: ein erfindungsgemäßes Messgerät in einer Schrägansicht,
- Fig. 2: ein erfindungsgemäßes Messgerät in einer schematischen Darstellung und
- Fig. 3: das Messgerät aus Fig. 1 in einer Draufsicht von der Unterseite des Messgeräts her.

In den Figuren sind gleiche oder funktional gleich wirkende Bauteile mit den gleichen Bezugszeichen versehen.

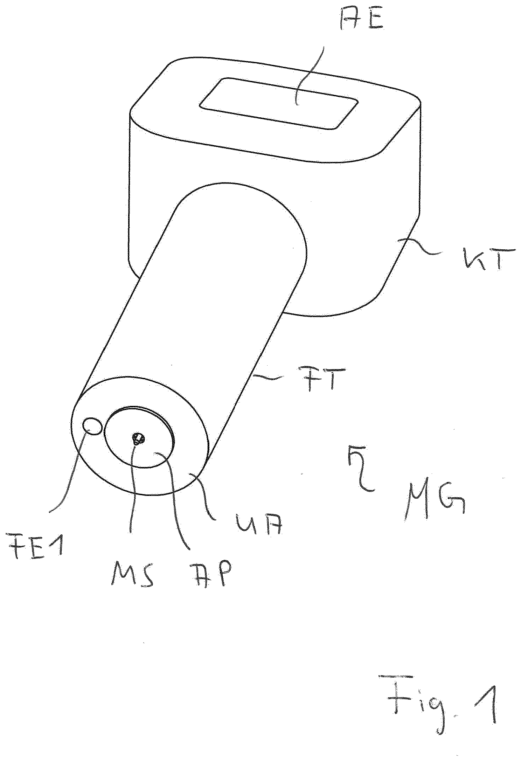

In Fig. 1 wird nachfolgend eine erste Ausführungsform eines Messgeräts MG beschrieben.

Das Messgerät MG weist ein in Form eines Fußteils ausgeführtes Unterteil FT auf, an das sich ein Kopfteil KT anschließt. Eine Seite des Kopfteils KT ist mit einer beispielsweise digitalen Anzeigeeinheit AE versehen. Am unteren Ende des Fußteils FT befindet sich eine Abschlussfläche UA, in die eine Auflageplatte AP so angeordnet ist, dass die Auflageplatte AP aus der das Unterteil FT begrenzenden Abschlussfläche UA hervortritt. Die Auflageplatte AP weist eine Öffnung auf, durch die ein Eindringkörper MS hindurch tritt. Der Eindringkörper MS wird auf fachübliche Weise mittels einer Messeinrichtung (nicht in Fig. 1 gezeigt) zur Bestimmung einer Eindringtiefe in einem Prüfkörper verwendet. Die Abschlussfläche UA weist eine erste Messöffnung FE1 auf, wobei hinter der ersten Messöffnung FE1 eine innerhalb des Unterteils FT angeordnete erste Sensoreinheit SE1 angeordnet ist.

Die erste Sensoreinheit SE1 kann eine Temperaturmessung einer Oberfläche des Prüfkörpers durchführen.

Dabei wird die Temperaturmessung berührungslos mittels eines auf Infrarotstrahlung basierenden Sensors vorgenommen. Zudem wird die erste Messöffnung FE1 in Form eines in der Abschlussfläche (UA) eingebrachten Fensters gebildet, das beispielsweise als Quarz-Fenster transparent oder wenigstens teiltransparent für Infrarotstrahlung ist.

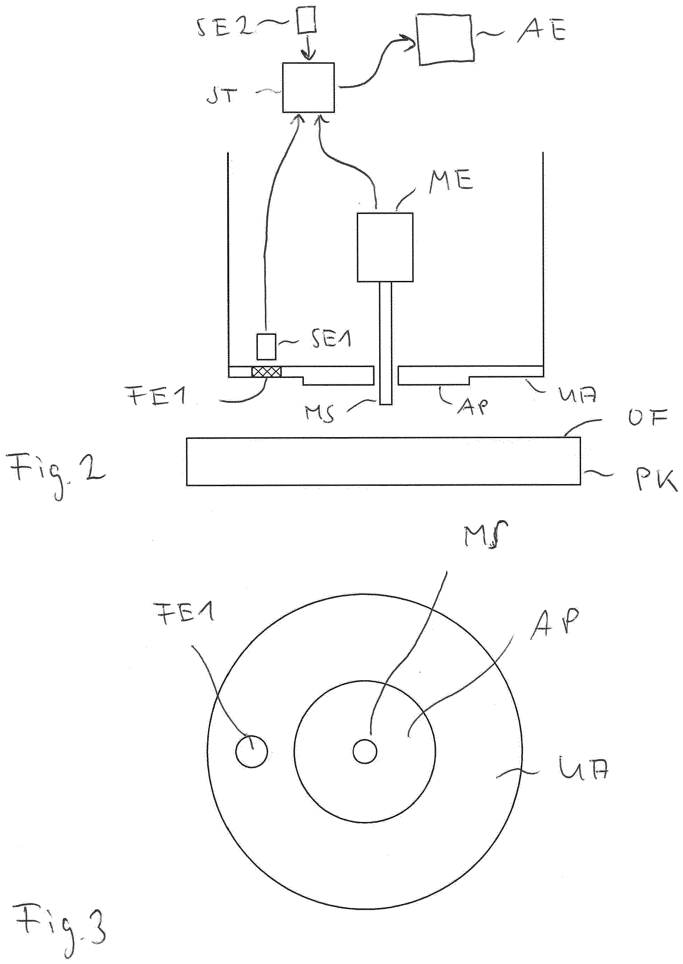

Das Zusammenspiel der einzelnen Messeinrichtungen ist schematisch in Fig. 2 nochmals gezeigt. Fig. 2 ist dabei eine Querschnittsansicht des Unterteils FT des Messgeräts MG, wobei die elektronischen Komponenten und ihre Verbindungen untereinander lediglich schematisch eingezeichnet sind. Der in radialer Richtung von der Auflageplatte AP umgebene Eindringkörper MS ist mit der Messeinrichtung ME gekoppelt, wobei die Messeinrichtung ME beispielsweise die Beaufschlagung des Eindringkörpers MS mit einer Kraft und über eine optische Wegaufnahme die Bestimmung einer Eindringtiefe in dem Prüfkörper PK ermöglicht.

Die Bestimmung von Härtewerten, insbesondere von elastischen Werkstoffen mittels des Eindringkörpers MS ist an sich aus dem Stand der Technik bekannt. Die erste Sensoreinheit SE, die als berührungsloser Infrarot-Sensor, der einen Emitter und einen Detektor für Infrarotsstrahlung aufweist, ausgeführt ist, ist hinter der ersten Messöffnung FE1, die beispielsweise als Quarzfenster ausgebildet ist, angeordnet. Demnach kann die erste Sensoreinheit SE1 die Temperaturmessung der Oberfläche OF des Prüfkörpers PK durchführen.

Die erste Sensoreinheit SE1 ist mit einer Steuereinheit ST verbunden, die auch Signale von der Messeinrichtung ME empfängt. Desweiteren kann es vorgesehen sein, dass eine zweite Sensoreinrichtung SE2 mit der Steuereinrichtung ST verbunden ist. Die zweite Sensoreinheit SE2 kann beispielsweise eine Temperaturmessung der Umgebung des Messgeräts MG durchführen. Ebenso kann es vorgesehen sein, dass die zweite Steuereinrichtung SE2 (oder eine weitere Steuereinrichtung, falls gewünscht) eine Luftfeuchtigkeitsmessung der Umgebung des Messgeräts durchführen kann.

Die Steuereinheit ST kann die von den Sensoreinheiten SE1 und SE2 bzw. der Messeinrichtung ME empfangenen Daten an die Anzeigeeinheit AE weiter geben. Alternativ oder zusätzlich ist es auch vorgesehen, dass die Steuereinheit ST die Daten über eine Schnittstelle (nicht in Fig. 2 gezeigt) an einen externen Rechner überträgt.

Vorteilhafterweise wird die Steuereinheit ST im Kopfteil KT des Messgeräts MG integriert. Es ist aber auch denkbar, dass die Steuereinheit ST als externe Einheit mit dem Messgerät MG verbunden wird, wobei dazu beispielsweise die oben beschriebene Schnittstelle herangezogen werden kann. Ein externer Rechner würde dann über die Schnittstelle Daten von der ersten Sensoreinheit SE1 bzw. der zweiten Sensoreinheit SE2 sowie der Messeinrichtung ME empfangen. Bei der Verwendung des Messgeräts MG als Handgerät kann eine automatische Aktivierung dadurch erfolgen, dass die Steuereinheit ST die Messungen zur Bestimmung des Ausgangssignals der Messeinrichtung ME und des Ausgangssignals der ersten Sensoreinheit SE1 infolge eines Aufsetzens des Messgeräts MG auf die Oberfläche OF des Prüfkörpers PK startet. Demnach wurden die entsprechenden Messwerte automatisch bei Benutzung des Messgerätes MG an die Anzeigeeinheit AE übermittelt werden bzw. könnten über die Schnittstelle von einem Rechner ausgelesen werden.

Sämtliche Sensoreinheiten können auch mit einer Kompensation der Eigentemperaturen versehen sein, um die Genauigkeit der ermittelten Messgrößen weiter zu erhöhen. Die Möglichkeiten, die Ausgangssignale der Messeinrichtung ME bzw. der ersten Sensoreinheit SE1 oder der zweiten Sensoreinheit SE2 weiter zu verarbeiten, sind dabei sehr vielfältig. So kann die Steuereinheit ST auch mit einem Speicher versehen sein, der eine Aufzeichnung der entsprechenden Messwerte ermöglicht. Außerdem kann die Steuereinheit bereits die Messgrößen so kombinieren, dass ein bezüglich der Temperatur des Prüfkörpers PK kompensierter Härtewert berechnet wird und beispielsweise an die Anzeigeeinheit AE übertragen wird.

Wie in Fig. 3 dargestellt, erfolgt auf der das Unterteil FT begrenzenden Abschlussfläche UA sowohl eine Messung der Eindringtiefe mittels des Eindringkörpers MS als auch eine Temperaturmessung durch die erste Messöffnung FE1 hindurch. Die beiden Messgrößen können sowohl einzeln weiter gegeben werden als auch korreliert als temperaturkompensierter Härtewert ausgegeben werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Messgerät zur Bestimmung von Härtewerten elastischer Werkstoffe, umfassend
- einen Eindringkörper (MS), der in radialer Richtung von einer Auflageplatte (AP) umgeben ist und der mit einer Messeinrichtung (ME) zur Bestimmung einer Eindringtiefe in einem Prüfkörper (PK) in Verbindung steht, wobei
- die Auflageplatte (AP) im Bereich eines Unterteils (FT) und aus einer das Unterteil (FT) begrenzenden Abschlussfläche (UA) hervortretend angeordnet ist, sowie
- eine erste Sensoreinheit (SE1) zur Durchführung einer Temperaturmessung einer Oberfläche (OF) des Prüfkörpers (PK), wobei die erste Sensoreinheit (SE1) berührungslos und als Emitter und Detektor für Infrarotstrahlung ausgeführt ist, wobei
- ein Ausgangssignal der ersten Sensoreinheit (SE1) zur Messung der Temperatur einer Oberfläche (OF) des Prüfkörpers (PK) und ein Ausgangssignal der Messeinrichtung (ME) zur Bestimmung der Härte des Prüfkörpers (PK) übertragbar sind,
**dadurch gekennzeichnet, dass**
- die Abschlussfläche (UA) außerhalb der Auflageplatte (AP) eine erste Messöffnung (FE1) aufweist, die so ausgeführt ist, dass die innerhalb des Unterteils (FT) hinter der ersten Messöffnung (FE1) angeordnete erste Sensoreinheit (SE1) eine Temperaturmessung einer Oberfläche (OF) des Prüfkörpers (PK) durchführen kann und wobei
- -die erste Messöffnung (FE1) ein in der Abschlussfläche (UA) eingebrachtes Fenster aufweist, das für Infrarotstrahlung teilweise oder vollständig transparent ist.

2. Messgerät nach Anspruch 1, bei dem die Ausgangssignale der ersten Sensoreinheit (SE1) zur Messung der Temperatur des Prüfkörpers (PK) und der Messeinrichtung (ME) zur Bestimmung der Härte des Prüfkörpers (PK) zu einer oberhalb des Unterteils (FT) in einem Kopfteil (KT) angeordneten Anzeigeeinheit (AE) übertragbar sind.

3. Messgerät nach Anspruch 1 oder 2, bei dem die Ausgangssignale der ersten Sensoreinheit (SE1) zur Messung der Temperatur des Prüfkörpers (PK) und der Messeinrichtung (ME) zur Bestimmung der Härte des Prüfkörpers (PK) zu einer Schnittstelle zum Anschluss eines Rechners übertragbar sind.

4. Messgerät nach einem der Ansprüche 1 bis 3, bei dem in dem Kopfteil (KT) eine zweite Sensoreinheit (SE2) angebracht ist, die eine Temperaturmessung der Umgebung des Messgeräts (MG) durchführen kann.

5. Messgerät nach Anspruch 4, bei dem eine weitere Sensoreinheit angebracht ist, die eine Luftfeuchtigkeitsmessung der Umgebung des Messgeräts (MG) durchführen kann.

6. Messgerät nach einem der Ansprüche 1 bis 5, bei dem eine Steuereinheit (ST) eingerichtet ist, Steuersignale an die Messeinrichtung (ME) und die erste Sensoreinheit (SE1) abzugeben, um Messungen zur Bestimmung des Ausgangssignals der Messeinrichtung (ME) und des Ausgangssignals der ersten Sensoreinheit (SE1) aufzuzeichnen.

7. Messgerät nach Anspruch 6, bei dem die Steuereinheit (ST) im Kopfteil (KT) integriert ist.

8. Messgerät nach Anspruch 6, bei dem die Steuereinheit (ST) als externe Einheit mit dem Messgerät verbindbar ist.

9. Messgerät nach einem der Ansprüche 6 bis 8, bei dem die Steuereinheit (ST) die Messungen zur Bestimmung des Ausgangssignals der Messeinrichtung (ME) und des Ausgangssignals der ersten Sensoreinheit (SE1) in Folge eines Aufsetzens auf den Prüfkörper (PK) startet.

10. Messgerät nach einem der Ansprüche 1 bis 9, bei dem die erste Sensoreinheit (SE1) und/oder die zweite Sensoreinheit (SE2) und/oder die dritte Sensoreinheit (SE3) mit einer Kompensation der Eigentemperatur versehen ist.

11. Messgerät nach einem der Ansprüche 2 bis 10, bei dem das Ausgangssignal der Messeinrichtung (ME) und das Ausgangssignal der ersten Sensoreinheit (SE1) von der Steuereinheit (ST) zu dem bezüglich der Temperatur des Prüfkörpers (PK) kompensierten Härtewerts bearbeitbar und an die Anzeigeeinheit (AE) übertragbar sind.

12. Messgerät nach einem der Ansprüche 1 bis 11, das in eine Halteanordnung einführbar ist, um ein stationäres Messgerät zu schaffen, oder das als Handmessgerät aufgebaut ist.

13. Verfahren zur Bestimmung von Härtewerten elastischer Werkstoffe mit einem Messgerät (MG) nach einem Ansprüche 1 bis 12, bei dem eine Temperaturmessung der Oberfläche (OF) des Prüfkörpers (PK) und eine Härtemessung des Prüfkörpers (PK) mittels des Messgeräts (MG) durchgeführt werden.

## Claims

1. Measuring device for determining hardness values of resilient materials, comprising
- a penetrator (MS) which is surrounded in the radial direction by a support plate (AP) and which is connected to a measuring apparatus (ME) for determining a penetration depth in a test sample (PK),
- the support plate (AP) being arranged in the region of a lower part (FT) and so as to protrude out of an end face (UA) delimiting the lower part (FT), and
- a first sensor unit (SE1) for measuring the temperature of a surface (OF) of the test sample (PK), the first sensor unit (SE1) being contactless and designed as an emitter and detector for infrared radiation,
- it being possible to transmit an output signal of the first sensor unit (SE1) for measuring the temperature of a surface (OF) of the test sample (PK) and an output signal of the measuring apparatus (ME) for determining the hardness of the test sample (PK),
**characterized in that**
- the end face (UA) has a first measurement opening (FE1) outside the support plate (AP), which opening is designed such that the first sensor unit (SE1) arranged inside the lower part (FT) behind the first measurement opening (FE1) can measure the temperature of a surface (OF) of the test sample (PK) and
- the first measurement opening (FE1) having a window incorporated in the end face (UA), which window is partially or completely transparent to infrared radiation.

2. Measuring device according to claim 1, wherein the output signals of the first sensor unit (SE1) for measuring the temperature of the test sample (PK) and of the measuring apparatus (ME) for determining the hardness of the test sample (PK) can be transmitted to a display unit (AE) arranged above the lower part (FT) in a head part (KT).

3. Measuring device according to either claim 1 or claim 2, wherein the output signals of the first sensor unit (SE1) for measuring the temperature of the test sample (PK) and of the measuring apparatus (ME) for determining the hardness of the test sample (PK) can be transmitted to an interface for connecting a computer.

4. Measuring device according to any of claims 1 to 3, wherein a second sensor unit (SE2) is mounted in the head part (KT) and can measure the temperature of the surroundings of the measuring device (MG).

5. Measuring device according claim 4, wherein a further sensor unit is mounted which can measure the atmospheric humidity of the surroundings of the measuring device (MG).

6. Measuring device according to any of claims 1 to 5, wherein a control unit (ST) is designed to emit control signals to the measuring apparatus (ME) and the first sensor unit (SE1) in order to record measurements for determining the output signal of the measuring apparatus (ME) and the output signal of the first sensor unit (SE1).

7. Measuring device according to claim 6, wherein the control unit (ST) is integrated in the head part (KT).

8. Measuring device according to claim 6, wherein the control unit (ST) can be connected to the measuring device as an external unit.

9. Measuring device according to any of claims 6 to 8, wherein the control unit (ST) starts the measurements for determining the output signal of the measuring apparatus (ME) and the output signal of the first sensor unit (SE1) after being placed on the test sample (PK).

10. Measuring device according to any of claims 1 to 9, wherein the first sensor unit (SE1) and/or the second sensor unit (SE2) and/or the third sensor unit (SE3) is provided with compensation for the intrinsic temperature.

11. Measuring device according to any of claims 2 to 10, wherein the output signal of the measuring apparatus (ME) and the output signal of the first sensor unit (SE1) can be processed by the control unit (ST) to form the hardness value which is compensated for with respect to the temperature of the test sample (PK) and can be transmitted to the display unit (AE).

12. Measuring device according to any of claims 1 to 11 which can be inserted into a retaining assembly in order to produce a stationary measuring device, or which is constructed as a hand-held measuring device.

13. Method for determining hardness values of resilient materials using a measuring device (MG) according to any of claims 1 to 12, wherein the temperature of the surface (OF) of the test sample (PK) and the hardness of the test sample (PK) are measured by means of the measuring device (MG).

## Revendications

1. Instrument de mesure pour déterminer les valeurs de dureté de matériaux élastiques, comprenant
- un pénétrateur (MS) qui est entouré dans la direction radiale par une plaque de support (AP) et qui est relié à un dispositif de mesure (ME) pour déterminer une profondeur de pénétration dans un échantillon (PK), où
- la plaque de support (AP) est disposée dans la zone d'une partie inférieure (FT) et dépasse d'une surface de fermeture (UA) délimitant la partie inférieure (FT), et
- une première unité de capteur (SE1) permettant de mesurer la température d'une surface (OF) de l'échantillon (PK), la première unité de capteur (SE1) étant conçue sans contact et comme émetteur et détecteur de rayonnement infrarouge, où
- un signal de sortie de la première unité de capteur (SE1) permettant de mesurer la température d'une surface (OF) de l'échantillon (PK) et un signal de sortie du dispositif de mesure (ME) permettant de déterminer la dureté de l'échantillon (PK) peuvent être transmis, **caractérisé en ce que**
- la surface de fermeture (UA) à l'extérieur de la plaque de support (AP) présente une première ouverture de mesure (FE1) qui est conçue de telle sorte que la première unité de capteur (SE1) disposée dans la partie inférieure (FT) derrière la première ouverture de mesure (FE1) peut mesurer la température d'une surface (OF) de l'échantillon (PK), et où
- la première ouverture de mesure (FE1) présente une fenêtre qui est montée dans la surface de fermeture (UA) et qui est partiellement ou totalement transparente au rayonnement infrarouge.

2. Instrument de mesure selon la revendication 1, dans lequel les signaux de sortie de la première unité de capteur (SE1) permettant de mesurer la température de l'échantillon (PK) et du dispositif de mesure (ME) permettant de déterminer la dureté de l'échantillon (PK) peuvent être transmis à une unité de visualisation (AE) disposée au-dessus de la partie inférieure (FT) dans une partie supérieure (KT).

3. Instrument de mesure selon la revendication 1 ou 2, dans lequel les signaux de sortie de la première unité de capteur (SE1) permettant de mesurer la température de l'échantillon (PK) et du dispositif de mesure (ME) permettant de déterminer la dureté de l'échantillon (PK) peuvent être transmis à une interface pour connecter un ordinateur.

4. Instrument de mesure selon l'une des revendications 1 à 3, dans lequel une deuxième unité de capteur (SE2) est montée dans la partie supérieure (KT) et est capable de mesurer la température dans l'environnement de l'instrument de mesure (MG).

5. Instrument de mesure selon la revendication 4, dans lequel une unité de capteur supplémentaire est montée et peut mesurer l'humidité dans l'environnement de l'instrument de mesure (MG).

6. Instrument de mesure selon l'une des revendications 1 à 5, dans lequel une unité de commande (ST) est installée pour délivrer des signaux de commande au dispositif de mesure (ME) et à la première unité de capteur (SE1) afin d'enregistrer des mesures pour déterminer le signal de sortie de l'appareil de mesure (ME) et le signal de sortie de la première unité de capteur (SE1).

7. Instrument de mesure selon la revendication 6, dans lequel l'unité de commande (ST) est intégrée dans la partie supérieure (KT).

8. Instrument de mesure selon la revendication 6, dans lequel l'unité de commande (ST) peut être raccordée au compteur comme unité externe.

9. Instrument de mesure selon l'une des revendications 6 à 8, dans lequel l'unité de commande (ST) lance les mesures pour déterminer le signal de sortie du dispositif de mesure (ME) et le signal de sortie de la première unité de capteur (SE1) après avoir été placée sur l'échantillon (PK).

10. Instrument de mesure selon l'une des revendications 1 à 9, dans lequel la première unité de capteur (SE1) et/ou la deuxième unité de capteur (SE2) et/ou la troisième unité de capteur (SE3) sont munies d'une compensation pour la température intrinsèque.

11. Instrument de mesure selon l'une des revendications 2 à 10, dans lequel le signal de sortie du dispositif de mesure (ME) et le signal de sortie de la première unité de capteur (SE1) peuvent être traités par l'unité de commande (ST) en ce qui concerne la valeur de dureté compensée par rapport à la température de l'échantillon (PK) et transmis à l'unité de visualisation (AE).

12. Instrument de mesure selon l'une des revendications 1 à 11, qui peut être inséré dans un dispositif de retenue pour créer un instrument de mesure stationnaire ou qui est conçu comme un instrument de mesure portatif.

13. Procédé de détermination de valeurs de dureté de matériaux élastiques à l'aide d'un instrument de mesure (MG) selon les revendications 1 à 12, dans lequel une mesure de température de la surface (OF) de l'échantillon (PK) et une mesure de dureté de l'échantillon (PK) sont effectuées au moyen de l'instrument de mesure (MG).
